# EUROPÄISCHE PATENTSCHRIFT

(11) **EP 2 506 096 B1**
(45) Veröffentlichungstag und Bekanntmachung des Hinweises auf die Patenterteilung: **17.06.2015**
(21) Anmeldenummer: 12158700.0
(22) Anmeldetag: 09.03.2012
(51) Int. Cl.: G05B 15/02, H04L 12/28, G05B 19/042, H04L 12/40

(54) **Verfahren zum logischen Verknüpfen von Sensoren und Aktoren im Rahmen der Inbetriebnahme eines Installationssystems**
Method for logically connecting sensors and actuators when starting up an installation system
Procédé de combinaison logique de capteurs et d'actionneurs dans le cadre de la mise en service d'un système d'installation

(30) Priorität: 29.03.2011 DE 102011001614
(43) Veröffentlichungstag der Anmeldung: 03.10.2012
(73) Patentinhaber: Insta Elektro GmbH, 58511 Lüdenscheid (DE)
(72) Erfinder: Kress, Wolfram, 53721 Siegburg (DE); Scharbatke, Kai, 58515 Lüdenscheid (DE)
(74) Vertreter: Haverkamp, Jens

(56) Entgegenhaltungen:
- WO-A1-2006/136985
- DE-A1-102004 027 893
- DE-A1-102006 020 122
- DE-A1-102008 017 292
- ANONYMOUS: 'I/O I/O, Building Automation Application Note DK9221-1110-0037 IntegrationvonEIB-LinienineinePC-basierte Gebäudesystemtechnik', [Online] 30 November 2010, Seiten 1 - 12, XP055130063 Gefunden im Internet: <URL:ftp://download.beckhoff.com/document/A pplication_Notes/DK9221-1110-0037.pdf> [gefunden am 2014-07-18]

## Beschreibung

Die Erfindung betrifft ein Verfahren zum logischen Verknüpfen von Sensoren und Aktoren als untereinander über einen Bus verbundene Funktionsbausteine eines Netzwerkes, geeignet um im Rahmen einer Inbetriebnahme eines Gebäudeinstallationssystems angewandt werden zu können. Netzwerke zur Kommunikation räumlich verteilter Systemkomponenten - Funktionsbausteine - etwa Aktoren, Sensoren und Steuergeräte, sind hinlänglich bekannt. Verwendung finden diese beispielsweise in Fahrzeugen, in Systemen für die Bürokommunikation, in der Industrieautomation und im Bereich der Gebäudeautomatisierungstechnik. Zur Automatisierung der Gebäudetechnik werden zum Aufbau eines solchen Netzwerkes Installationsbusse eingesetzt, wobei mittels eines solchen Bussystems Haushaltsgeräte, Komponenten einer Alarmanlage, die Gebäudeheizung bzw. Gebäudeklimatisierung, die Beleuchtung und dergleichen, mithin die Gebäudeinstallationen gesteuert und fernbedient werden können.

Derartige Bussysteme arbeiten vielfach nach dem auf dem europäischen Installationsbus (EIB) aufbauenden KNX-Standard. Damit ein solches Bussystem funktionieren kann, ist es erforderlich, dass die als Busteilnehmer eingesetzten Funktionsbausteine jeweils eine systemseitig eindeutige Adresse zugeteilt bekommen haben. Dieses erfolgt bei der Systeminitialisierung, gesteuert mittels eines Steuergerätes, zu der neben einer Geräteerkennung eine Adressierung der an den Bus angeschlossenen Geräte - den Funktionsbausteinen - gehört. Somit wird jedem Busteilnehmer eine eindeutige Adresse zugeteilt.

Bei Gebäudeautomatisierungsanwendungen im Rahmen von Gebäudeinstallationssystemen müssen nach einer Initialisierung diejenigen Sensoren - Tastschalter, Messsonden, etc. - denjenigen Aktoren zugeordnet werden, die durch einen solchen Sensor beeinflusst werden sollen. So kann ein Aktor beispielsweise mittels eines Tastsensors ein- und ausgeschaltet oder je nach Bedienung den Aktor über eine bestimmte Zeit angesteuert werden, beispielsweise zum Zwecke des Dimmens einer Beleuchtungseinrichtung. Entsprechendes gilt auch für alle weiteren Aktoren eines Gebäudeinstallationssystems, wie beispielsweise eine Jalousie- oder Rolladensteuerung, die Heizungs- und Klimatisierungssteuerung oder dergleichen.

Die Kommunikationsstrecke - der Bus - kann drahtgebunden oder auch drahtlos, im letzteren Fall insbesondere unter Verwendung einer Funkstrecke oder aus einer Kombination dieser Kommunikationswege aufgebaut sein.

Bei zahlreichen Aktoren von Installationen innerhalb eines Gebäudes, beispielsweise bei der Beleuchtungssteuerung, muss für die Zwecke einer solchen Verschaltung eine logische Verknüpfung zwischen dem oder den einen solchen Aktor beeinflussenden Sensoren und dem Aktor, durch den eine bestimmte Installation angesteuert wird, geschaffen werden. Als Aktor ist im Rahmen dieser Ausführungen dasjenige Aggregat einer Installation zu verstehen, durch die diese geändert werden kann. Bei einer Belechtungsinstallation kann der Aktor ein Dimmaktor sein, an den ein oder mehrere Lichtquellen angeschlossen sind, diese mithin von dem Dimmaktor angesteuert werden. Insofern bewirkt ein solcher Aktor einen Effekt, der bei einer Belechtungsinstallation das Ein- und Ausschalten sowie das Dimmen von Lampen ist. Bei einer Jalousieinstallation ist somit ein den die Jalousie antreibender Elektromotor ansteuerndes Relais, beispielsweise im Schaltschrank als Reiheneinbaugerät installiert, der Aktor und die Jalousie das bewegte und somit von dem Relais letztendlich gesteuerte Element. In Bezug auf den von den Aktoren bewirkten Effekt können die von diesen angesteuerten Elemente, gemäß den vorbeschriebenen Beispielen ein oder mehrere Lichtquellen oder der die Jalousien bewegende Elektromotor, auch als Effektoren angesprochen werden.

Bei modernen Gebäudeinstallationssystemen sind, wenn möglich, die Aktoren typischerweise in einem Schaltschrank - in Wohngebäuden oftmals im Keller oder auch in Etagenverteilern - zusammengefasst installiert. Für die Zwecke des Verschaltens eines Sensors mit einem Aktor ist es daher erforderlich, den Installationsort des Aktors, also beispielsweise der Leistungselektronik zu kennen. Da ein solcher Aktor über den Bus angesprochen werden soll, muss dieser einen Buszugang aufweisen, mithin selbst Busteilnehmer sein. Zu diesem Zweck sind Reiheneinbaugeräte entwickelt worden, in denen unterschiedliche Aktoren zusammengefasst sind. Aktoren können selbstverständlich auch vereinzeit, beispielsweise in einer Unterputzdose installiert sein. Die Aktoren verfügen über einen Busankoppler. Sind mehrere Aktoren zu einem Reiheneinbaugerät zusammengefasst, erfolgt die Busankopplung über das Reiheneinbaugerät. Innerhalb des Netzwerkes ist jedem Busteilnehmer eine eindeutige Adresse zugeordnet. Dabei wird dem Aktor die Adresse des Sensors bekannt gegeben als Information darüber, dass der Sensor berechtigt ist diesen Aktor anzusteuern. Typischerweise wird ein Multicast als so genannter "filter broadcast" angewandt, wobei die Datensenke anhand der bekannten Sensoradressen relevante Telegramme zulässt.

Das Verschalten von Funktionsbausteinen untereinander Rechner-basiert wird mittels einer Benutzeroberfläche vorgenommen. Bekannt für diese Zwecke ist die Inbetriebnahme-Software ETS (EIB-Toolsoftware). Beschrieben ist ein derartiges Verfahren als Integration von EIB-Linien in eine PC-basierte Gebäudetechnik in Beckhoff Building Automation (http://download.beckhoff.com/download/document/Application_Notes/DK 9221-1110-0037.pdf). Basis für die Bereitstellung der logischen Verknüpfungen ist die Zuordnung von korrespondierenden Funktionen der Sensoren und Aktoren zu einer Gruppenadresse. Eine solche Art der Verschaltung setzt allerdings ein hohes Abstraktionsvermögen des die Inbetriebnahme vornehmenden Personals voraus. Bei einer Beleuchtungsinstallation wird beispielsweise ein Tastsensor einem Dimmaktor zugeordnet. Bei der Zuordnung des dem Tastsensor zuzuordnenden Dimmaktors ist darauf zu achten, dass dem Tastsensor der richtige Dimmaktor zugeordnet wird, nämlich derjenige, der genau diejenige Leuchte oder Leuchteneinrichtung ansteuert, die mit dem Tastsensor beeinflusst werden soll. Bei diesem vorbekannten Verfahren wird den miteinander verschalteten Funktionsbausteinen eine gleiche Gruppenadresse zugeordnet bzw. die miteinander verschalteten Funktionsbausteine mit Hilfe einer solchen Gruppenadresse in Beziehung gesetzt.

Andere Verfahren zur Automatisierung von Gebäuden arbeiten mit Steuerungssystemen, welche elementar programmiert werden. Beispielhaft sei diesbezüglich die Programmierung von SPS-Systemen nach IEC 61131 genannt. Bei diesem Verfahren wird Rechner-gestützt quasi ein schematisierter Schaltplan für die Funktionsbausteine einer Funktionsgruppe erstellt.

Die DE 10 2008 017 292 A1 beschreibt ein Computergestütztes System zur Verwaltung und Steuerung eines Gebäudemanagementsystems. Hierbei wird dem Benutzer auf einer grafischen Benutzeroberfläche eine Darstellung des jeweiligen Gebäudes gemäß einer zugrunde gelegten Achs-Zell-Struktur angezeigt. Aufgrund von hinterlegten Daten über die jeweilige Achse und Zelle, in der sich ein Aktor bzw. Sensor befindet, werden die Positionen der genannten Komponenten innerhalb des Gebäudes angezeigt. Der Benutzer kann über die Benutzeroberfläche ggf. Informationen zu den Komponenten abrufen, diese ansteuern, neu gruppieren und neue Komponenten hinzufügen. Es sind keine Details zur Einrichtung oder zur Umstrukturierung des Gebäudemanagementsystems offenbart.

Die DE 10 2004 027 893 A1 offenbart ein Verfahren zum Einbinden eines Endgeräts eines Hausautomationssystems auf Funkbasis. Hierbei wird zunächst eine Kabelverbindung zwischen einer Zentraleinheit und dem Endgerät hergestellt, wodurch vermieden wird, dass eine versehentliche Einbindung in das System einer anderen Zentraleinheit erfolgt. Das Endgerät wird erkannt und erhält eine Identifikationsnummer. Optional kann der Benutzer auch eine Ortsfestlegung des Endgeräts eingeben, die dessen Standort angibt. Ein Ausführungsbeispiel erläutert die Einbindung eines Thermometers und eines Heizkörperstellgliedes, wobei diese von der Zentraleinheit automatisch aufgrund ihrer Standorte verknüpft.

In der WO 2006/136 985 A1 ist Verfahren zum Konfigurieren eines Geräts innerhalb eines Netzwerks offenbart. Hierbei sind innerhalb einer Steuereinheit funktionellen Anforderungen für "virtuelle Geräte" hinterlegt. Das physische Gerät sendet Positionsinformationen an die Steuereinheit und wird aufgrund dieser mit einem bestimmten virtuellen Gerät identifiziert. Anschließend sendet die Steuereinheit die entsprechenden funktionellen Anforderungen über das Netzwerk an das Gerät. Im Betrieb melden z.B. Sensoren bestimmte Werte an die Steuereinheit, die hieraufhin Aktoren ansteuert. Ggf. können die Geräte auch direkt miteinander kommunizieren. Bei der Planung des Netzwerks ist vorgesehen, dass der Benutzer mit einer entsprechenden Software die erlaubten Verbindungen zwischen Geräten festlegen kann. Alternativ können auch vorgesehene Verbindungen aus einer technischen Zeichnung eingelesen werden.

Die DE 10 2006 020 122 A1 zeigt ein Verfahren zum Erfassen der Verknüpfungsdaten von Sensoren und Aktoren. Hierbei ist jedem Sensor und Aktor eine Adresse zugeordnet. Sensoren senden zum Ansteuern von Aktoren ein Telegramm mit ihrer eigenen Adresse. Durch Abgleich mit einer aktorseitig hinterlegten Adresstabelle entscheidet jeder Aktor, ob er auf den Steuerbefehl reagiert. Das Telegramm des Sensors wird von außerdem einem Kommunikationsgerät empfangen, wodurch dieses die Adresse desselben ermittelt. Ein Benutzer kann dann eine Ortsbezeichnung des Sensors eingeben. Danach erfolgt eine unadressierte Anfrage an alle Aktoren, ob sie diese Adresse in ihrer Tabelle gespeichert haben. Aus den Antworten wird die Zuordnung ermittelt, anschließend gibt der Benutzer eine Ortsbezeichnung der jeweiligen Aktoren ein. Durch Wiederholung dieser Schritte für alle Sensoren wird ein Gesamtbild der Verknüpfungen erstellt.

Ausgehend von diesem diskutierten Stand der Technik liegt der Erfindung daher die Aufgabe zugrunde, ein eingangs genanntes Verfahren sowie ein eingangs genanntes Gebäudeinstallationssystem derart weiterzubilden, das nicht nur eine Inbetriebnahme mit Projektierung, Programmierung (Verschaltung) sondern auch eine Wartung und Diagnose erleichtert und vereinfacht durchgeführt werden kann. Zudem besteht der Wunsch die Orientierung und Strukturierung von Funktionsbausteinen innerhalb des Gebäudeinstallationssystems übersichtlicher zu gestalten.

Gelöst wird die verfahrensbezogene Aufgabe durch ein eingangs genanntes, gattungsgemäßes Verfahren, bei dem
- jedem Aktor zumindest zwei Attribute zugeteilt werden, von denen eines ein Installationsortattribut als Ortsangabe, an der der Aktor im Gebäude installiert ist, und ein weiteres ein Wirkortattribut als Ortsangabe ist, an der die Wirkung des Aktors im Gebäude stattfindet oder in Erscheinung tritt,
- jedem Sensor ein Installationsortattribut als Ortsangabe, an der der Sensor im Gebäude installiert ist, zugeordnet worden ist oder zugeordnet wird,
- ausgehend von dem Wirkortattribut eines Aktors wenigstens ein Installationsort bestimmt wird, von dem aus der Aktor beeinflusst werden soll, und aus der Gruppe der Sensoren ein oder mehrere Sensoren, durch die der Aktor beeinflusst werden soll, anhand dessen ausgewählt werden, dass ihr Installationsortattribut dem genannten Installationsort entspricht, und
- anschließend eine logische Verknüpfung zwischen den ausgewählten Sensoren und Aktoren hergestellt wird,
- wobei die Verknüpfung grafisch über eine Inbetriebnahmesoftware auf einem Display angezeigt wird, so dass ersichtlich ist, an welcher Stelle in dem Gebäude entsprechende Funktionsbausteine installiert sind.

Bei diesem Verfahren sind den Funktionsbausteinen Attribute zugeordnet, und zwar solche, die systemseitig abrufbar sind. Dadurch ist es möglich, beispielsweise mittels eines Steuergerätes anhand der den Funktionsbausteinen zugeordneten Attribute nicht nur bestimmte Funktionsbausteine auszuwählen, sondern diese auch miteinander zu verknüpfen bzw. zu verschalten.

Den als Aktoren ausgebildeten Funktionsbausteinen werden zwei Attribute zugeordnet. Eines dieser Attribute ist ein Installationsortattribut und stellt eine Ortsangabe dar, an der Aktor installiert ist. Hierbei kann es sich beispielsweise um eine Angabe handeln, in welchem Schaltschrank und in welchem Raum des Gebäudes dieser installiert ist. Ferner wird jedem als Aktor ausgebildeten Funktionsbaustein ein Wirkortattribut zugeteilt. Das Wirkortattribut ist eine Ortsangabe darüber, wo die Wirkung (der Effekt) des Aktors stattfindet oder wo diese in Erscheinung tritt, mithin wo der Effektor installiert ist bzw. in Erscheinung tritt. Bei zahlreichen Aktoren ist der Ort der Installation unterschiedlich von dem Ort seiner Wirkung, weshalb die vorgesehene Attributierung gerade für derartige Aktoren besonders sinnvoll ist. Diese Attributzuteilung gestattet für die Verschaltung eine Auswahl und eine Zuordnung und nach der Durchführung der Inbetriebnahme eine Überprüfung, Auswertung und/oder Ansteuerung anhand ihres Wirkortes. Die Möglichkeit einer Wirkort bezogenen Auswahl und die anschließende Verschaltung mit den jeweils ausgewählten Sensoren ist somit für eine die Inbetriebnahme vornehmende Person nicht nur einfacher, sondern erlaubt auch eine größere Übersichtlichkeit innerhalb des Gebäudeinstallationssystems bereits bei der Zuordnung von Sensoren den Aktoren. Zum Beispiel: Bei einer Beleuchtungsinstallation kann sich der Installationsort des Aktors, beispielsweise als Dimmaktor konzipiert, in Form eines Reiheneinbaugerätes in einem Schaltschrank im Keller des Gebäudes befinden. Der Wirkort des Aktors, namentlich der Ort, an dem die von diesem Aktor angesteuerte Leuchte installiert ist, befindet sich beispielsweise an der Decke im Flur im Erdgeschoss. Damit ermöglicht eine Attributvergabe, wie vorbeschrieben, das Auswählen von Aktoren allein anhand ihres Wirkortes, und zwar unabhängig davon, ob sich der Aktor am Wirkort befindet oder, wie in dem vorbeschriebenen Beispiel, in einem anderen Geschoss des Gebäudes. Ebenso können logische Verknüpfungen mit diesem Aktor allein anhand seines Wirkortattributes hergestellt werden, unabhängig von der Kenntnis seines tatsächlichen Installationsortes. Hierdurch wird auch die Strukturierung eines Automatisierungsprojektes in Teilprojekte erleichtert.

Den Sensoren, wobei es sich hierbei um Bediensensoren (Schalter, Taster oder dergleichen) sowie um Messsensoren (Helligkeitssensoren oder Temperaturfühler oder dergleichen) handeln kann, wird im Zuge dieses Verfahrens ein Installationsortattribut zugeteilt. Bei den Sensoren ist das Installationsortattribut eine Angabe darüber, wo in dem Gebäude der Sensor installiert ist bzw. von welchem Ort im Gebäude dieser bedient werden kann. Anhand dieses Attributes können durch einfaches Filtern aus der Gesamtanzahl der verfügbaren Sensoren diejenigen herausgefiltert werden, die mit einem Aktor in eine logische Verknüpfung gestellt werden können, mithin durch die ein zuvor ausgewählter Aktor beeinflusst werden soll. Nach der Auswahl eines oder mehrerer Sensoren, die einen zuvor bestimmten Aktor beeinflussen sollen, wird gemäß einer Weiterbildung diesen Sensoren ebenfalls ein Wirkortattribut zugeteilt. Dieses Wirkortattribut entspricht demjenigen des Aktors und stellt somit eine Ortsangabe darüber dar, wo die Wirkung des durch den jeweiligen Sensor beeinflussbaren Aktors stattfindet oder diese in Erscheinung tritt. Eine anschließend systemseitig durchgeführte logische Verknüpfung bzw. Verschaltung zur Ausbildung einer Automatisierungsteilaufgabe, umfassend den Aktor und die diesem zugeordneten Sensoren, die den Aktor beeinflussen sollen, erfolgt anhand des gemeinsamen Wirkortattributes. Für die Zwecke einer Zuordnung von Sensoren zum Ansteuern eines oder mehrerer bestimmter Aktoren ist die Vergabe eines Wirkortattributes an den oder die Sensoren nicht zwingend erforderlich. Die Verknüpfung kann allein anhand der Verschaltung definiert sein. Vorzugsweise wird die Verknüpfung grafisch über eine Inbetriebnahmesoftware auf einem Display angezeigt. Dieses erleichtert die Übersicht.

Die Inbetriebnahme, wobei im Rahmen dieser Ausführungen die Inbetriebnahme den gesamten Prozess der Geräteauswahl, des Herstellens der Verschaltung sowie das Inbetriebsetzen des Gebäudeinstallationssystems umfasst, der zuvor adressierten Funktionsbausteine eines Gebäudeinstallationssystems ist durch die Möglichkeit der Verknüpfung von Sensoren mit dem Wirkort der Aktoren bereits in der Phase der Verschaltung nicht unerheblich vereinfacht. Dieses gilt auch für eine Systemüberwachung und/oder Systemwartung und/oder Systemansteuerung, beispielsweise durch einen Anwender nach erfolgter Inbetriebnahme. So kann bei dieser Konzeption an das Gebäudeinstallationssystem, wenn nicht stationär angeschlossen, ein Computer mit einer entsprechenden Software angeschlossen werden, um etwa für die Zwecke einer Fehlersuche Funktionsgruppen anhand ihres gemeinsamen Wirkortattributes aus der Summe der Funktionsbausteine des Gebäudeinstallationssystems herauszufiltern. Genauso gut ist es möglich, diese Funktionen mit Hilfe einer Kombination aus Webserver und Client über das Internet von beliebiger Stelle angesteuert werden kann. Somit können auf einfache Weise sämtliche einer Funktionsgruppe zugeordneten Funktionsbausteine ermittelt werden, so dass im Falle einer Fehlersuche diese auf diese Funktionsbausteine beschränkt durchgeführt werden kann. Hilfreich ist hierbei zudem das weitere Attribut, namentlich das Installationsortattribut. Für die überprüfende Person ist sodann sofort ersichtlich, an welcher Stelle in dem Gebäude der Funktionsbaustein installiert ist, wobei dieses bei einem Aktor sein Installationsort ist. Die Attributierung und darauf basierende Verschaltung ist auch nach einer Inbetriebnahme des Gebäudeinstallationssystems nicht nur für Wartung- und Überprüfungsarbeiten zweckmäßig, sondern kann auch von dem Anwender selbst genutzt werden. Aus diesem Grunde sind die diesbezüglichen Daten systemseitig hinterlegt und können einem Systembenutzer, der mittels einer entsprechenden Schnittstelle Zugriff auf Systemdaten hat, genutzt werden, und zwar beispielsweise zum Überprüfen des Status von Aktoren und/oder zum Ansteuern derselben. Eine solche Bedienung kann mittels eines PC's oder mit einer anderen geeigneten Bedienoberfläche, beispielsweise ein PDA, ein Smartphone oder dergleichen vorgenommen werden. Die Anbindung einer solchen anwenderseitigen Eingabestation an das Netzwerk kann drahtgebunden oder auch drahtlos vorgesehen sein.

Den Funktionsbausteinen, insbesondere auch den Sensoren, können weitere Attribute zugeteilt werden. Hierbei kann es sich beispielsweise um ein Funktionalitätsattribut handeln. Ein solches Funktionalitätsattribut ist gemäß einer Ausführung eine Angabe darüber, ob es sich bei dem Sensor um einen Bediensensor, wie beispielsweise einen Schalter oder dergleichen, handelt oder ob dieser ein Messsensor ist. Die Zuordnung weiterer Attribute gestattet das Filtern anhand weiterer Kriterien.

Insofern ist das Zuordnen bzw. Zuteilen von Attributen an die Funktionsbausteine nicht nur ein Mittel, um in einfacher Art und Weise eine Verschaltung zwischen Aktoren und Sensoren zu ermöglichen, sondern auch, um Kriterien zum Auswählen von Sensoren und/oder Aktoren anhand bestimmter Filterkriterien zu schaffen. Dieses vereinfacht die Übersicht über das Gebäudeinstallationssystem bzw. seine Funktionsbausteine vor allem in größeren Installationen.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine schematisierte Darstellung einer Aktorauswahl zum Zwecke seiner Verschaltung mit Sensoren, die den Aktor beeinflussen sollen,
- **Fig. 2:**: eine Darstellung zum Auswählen von möglichen, dem Aktor der Figur 1 zuordenbaren Sensoren,
- **Fig. 3:**: die mit dem Aktor in Verbindung gesetzten ausgewählten Sensoren,
- **Fig. 4:**: eine schematisierte Darstellung eines Gebäudeinstallationssystems und Möglichkeiten eines Zugriffes auf das System und
- **Fig. 5:**: schematisiert ein Menüablauf zum Visualisieren und Steuern eines Aktors des Gebäudeinstallationssystems der Figur 4.

Für die Zwecke der Inbetriebnahme eines Gebäudeinstallationssystems, deren Funktionsbausteine - Aktoren und Sensoren - durch ein Netzwerk miteinander verbunden sind, erfolgt ein Verschalten von Aktoren und Sensoren, nachdem den Funktionsbausteinen in an sich bekannter Art und Weise eine Busadresse zugeordnet worden ist. Die Inbetriebnahme erfolgt mittels einer an den Bus angeschlossenen Steuereinrichtung, beispielsweise einem Computer unter Verwendung einer Inbetriebnahmesoftware.

Gemäß dem nachfolgend beschriebenen Beispiel soll die Flurdeckenbeleuchtung im Erdgeschoss eines mehrgeschossigen Wohngebäudes eingerichtet werden. Die Aktoren für die Innenbeleuchtung des Gebäudes befinden sich in einem Schaltschrank in einem Kellerraum (hier: dem Keller 1). Bei diesem Beispiel ist ein in diesem Schaltschrank angeordneter Dimmaktor mit der Flurdeckenbeleuchtung im Erdgeschoss verbunden und schaltet die Flurdeckenbeleuchtung im Erdgeschoss. Dieser Dimmaktor ist als Reiheneinbaugerät (hier: dem Reiheneinbaugerät 1) ausgeführt und in dem Schaltschrank angeordnet.

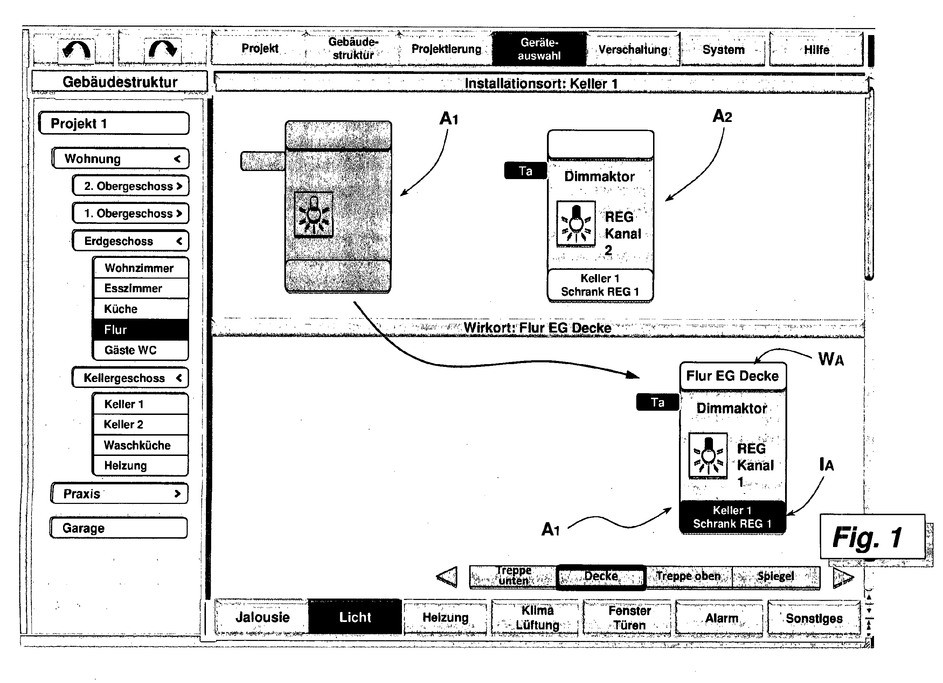

Zum Zwecke des Zuordnens von Sensoren, mit denen die Flurdeckenbeleuchtung im Erdgeschoss beeinflusst werden soll, wird in einem ersten Schritt der diesbezügliche Aktor ausgewählt. Bei dem dargestellten Ausführungsbeispiel werden hierfür aus der Anzahl möglicher Aktoren in einem ersten Filterschritt nur diejenigen Aktoren auf der grafischen Oberfläche einer Inbetriebnahmesoftware angezeigt, die für die Funktionalität "Licht" zur Verfügung stehen. Zum Zwecke der Filterung sind die Funktionsbausteine des Gebäudeinstallationssystems - Sensoren und Aktoren - in einer Datenbank hinterlegt und können anhand von diesen zugeordneten Attributen gefiltert werden. Bei dem dargestellten Ausführungsbeispiel wurden durch die vorgenommene Filterung beispielhaft die Dimmaktoren A₁, A₂ in dem Installationsort: Keller 1 für die Zwecke einer Lichtsteuerung ermittelt (siehe Figur 1). Von diesen möglichen Aktoren wird der für die Zwecke der Flurdeckenbeleuchtung im Erdgeschoss Zuständige ausgewählt. Bei dem dargestellten Ausführungsbeispiel ist dieses der Dimmaktor A₁ mit seinem Installationsortattribut "Keller 1, REG 1 ". Im Zuge dieser Auswahl wird dem Aktor A₁ ein weiteres Attribut zugeordnet, und zwar das Wirkortattribut "Flurdeckenbeleuchtung Erdgeschoss". Auf der grafischen Oberfläche ist dieses dadurch kenntlich gemacht, dass der ausgewählte Aktor A₁ aus dem oberen Feld "Installationsort: Keller 1" in das darunter befindliche Wirkortfeld "Wirkort: Flur" verschoben worden ist, wie in Figur 1 kenntlich gemacht. Durch die Auswahl des Aktors A₁ zum Ansteuern der Flurdeckenbeleuchtung im Erdgeschoss ist diesem Aktor das weitere Attribut "Flur EG Decke" zugeordnet worden. In Figur 1 ist das Installationsortattribut mit I_{A} und das Wirkortattribut mit W_{A} bezeichnet. Grafisch nicht gesondert dargestellt ist das dem Aktor A₁ ohnehin zugeordnete Attribut "Licht". Die Attribute I_{A}, W_{A} des Aktors A₁ sind systemseitig abrufbar; mithin kann der Aktor A₁ im Zuge der Systemverwaltung über einen oder mehrere dieser Attribute (selbstverständlich sind weitere möglich) ermittelt bzw. aus der Vielzahl der Aktoren herausgefiltert werden. Bei dem dargestellten Ausführungsbeispiel ist dieses nicht nur durch die Hinterlegung des Aktors A₁ im Rahmen der Inbetriebnahmesoftware in einer Datenbank der Fall. Bei dem dargestellten Ausführungsbeispiel verfügt der Aktor A₁ auch hardwareseitig über entsprechende Attributspeicherplätze, auf denen diese Attribute einzeln abrufbar abgelegt sind.

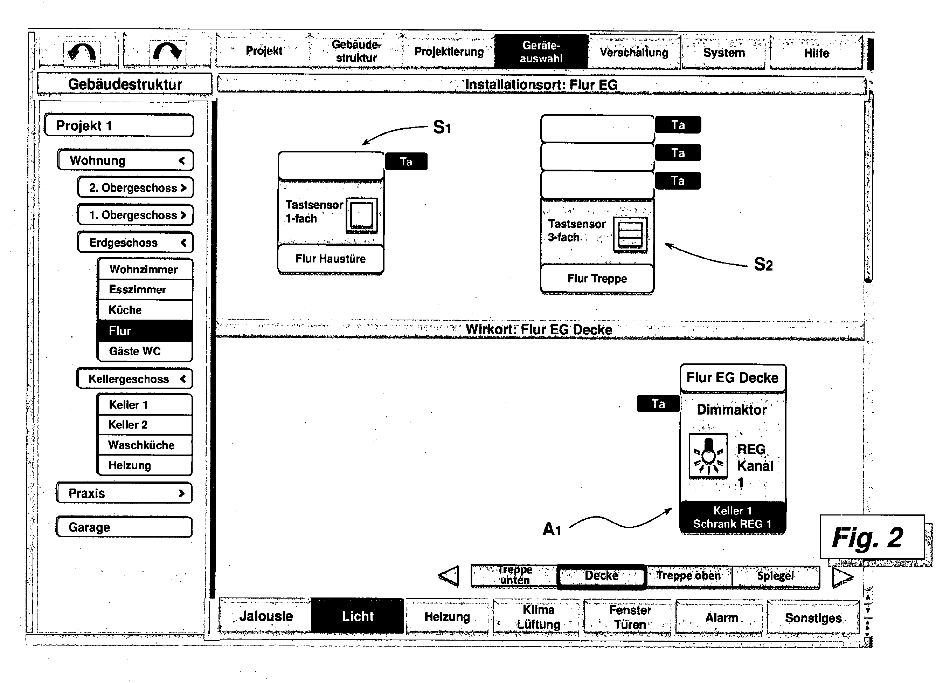

In einem nachfolgenden Schritt werden in entsprechender Weise Sensoren ausgewählt, durch die der Aktor A₁ beeinflusst werden soll. Zu diesem Zweck werden aus der Gesamtanzahl der möglichen Sensoren diejenigen anhand ihres Installationsortattributes gefiltert, von denen der Aktor A₁ beeinflusst werden soll. Bei dem dargestellten Ausführungsbeispiel soll der Aktor A₁ durch Tastsensoren aus dem Flur selbst angesteuert werden können. Im Zuge einer entsprechend durchgeführten Filterung anhand des den Sensoren zugeordneten Installationsortattributes sind zwei mögliche Tastsensoren mit Installationsort "Flur" ermittelt worden. Dieses ist in Figur 2 gezeigt. In gleicher Weise, wie dieses vorstehend zu Figur 1 anhand des Aktors A₁ beschrieben worden ist, werden die Sensoren S₁, S₂ aus dem Feld "Installationsort: Flur EG" in das Feld "Wirkort: Flur" gebracht, in welchem Zuge den Sensoren S₁, S₂ ebenso wie dem Aktor A₁ als Wirkortattribut "Flur EG Decke" zugeordnet wird. Es versteht sich, dass der Sensor S₁ zum gleichzeitigen Ansteuern weiterer Aktoren neben dem Aktor A₁ eingesetzt werden kann. Bei dem Tastsensor S₂ handelt es sich um einen Dreifachtastsensor, von dem zum Ansteuern der Flurdeckenbeleuchtung lediglich ein Tastsensor zur Verschaltung mit dem Aktor A₁ vorgesehen ist. Die beiden weiteren Anschlüsse sind für andere Installationen frei verfügbar.

Da die Flurdeckenbeleuchtung im Erdgeschoss auch von der Garage aus angesteuert werden soll, wird in einem zweiten Schritt nach Sensoren gefiltert, deren Installationsort sich in der Garage befindet. Die Auswahl erfolgt ebenso wie dieses zu der Auswahl der Sensoren S₁, S₂ beschrieben ist.

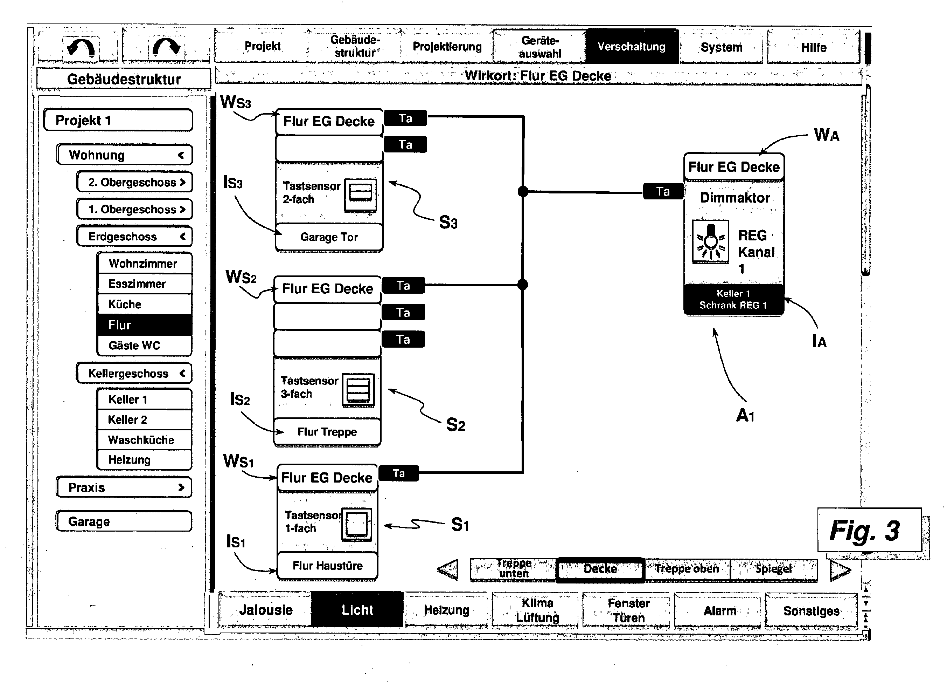

Somit wurden im Zuge der vorbeschriebenen Auswahl drei Sensoren ausgewählt, und zwar der Tastsensor S₁ mit Installationsort "Erdgeschoss Flur" im Bereich der Haustür, der Tastsensor S₂ mit Installationsort "Erdgeschoss Flur" an der Treppe im Flur und ein dritter Sensor S₃ mit Installationsort "Garage" im Bereich des Garagentores. Die Zuordnung der Sensoren S₁, S₂ und S₃ zu dem Aktor A₁ ist in Figur 3 gezeigt. Die dem Aktor A₁ zugeordneten Sensoren S₁, S₂, S₃ haben, wie aus Figur 3 ersichtlich, sämtlich das Wirkortattribut "Flur EG Decke" zugeteilt bekommen. Bei den Sensoren S₁, S₂, S₃ sind die Attribute "Installationsort" mit I_{S1}, I_{S2}, I_{S3} und "Wirkort" mit W_{S1}, W_{S2}, W_{S3} kenntlich gemacht.

Die vorstehende Beschreibung macht deutlich, dass eine Auswahl der zu verknüpfenden Funktionsbausteine einfach und rasch und vor allem sehr übersichtlich vorgenommen werden kann.

Bei dem dargestellten Ausführungsbeispiel verfügt jeder Sensor S₁, S₂ und S₃ auch hardwareseitig über Speicherplatz zum Ablegen zumindest eines weiteren Attributs. In diesem wird als weiteres Attribut der Wirkort des zu beeinflussenden Aktors A₁ gespeichert. Bei dem dargestellten Ausführungsbeispiel erhalten die Sensoren S₁, S₂, S₃ als Wirkortattribut "Flurdeckenbeleuchtung Erdgeschoss". Dieses Wirkortattribut entspricht demjenigen, welches auch der Aktor A₁ durch seine Auswahl und Bestimmung zugeteilt bekommen hat.

Bei dem dargestellten Ausführungsbeispiel verfügen die auf der grafischen Oberfläche des benutzten Systems abgebildeten Aktoren jeweils über ein oder mehrere links liegende Anschlüsse, während die Sensoren über ein oder mehrere rechts liegende Anschlüsse verfügen. Aus diesem Grunde werden bei diesem Ausführungsbeispiel die Aktoren rechtsseitig und die Sensoren linksseitig angeordnet.

In einem nächsten Schritt werden die Sensoren S₁, S₂ und S₃ mit dem Aktor A₁ durch eine an sich bekannte Quelle-Senke-Verschaltung (Source-Destination-Verschaltung) in eine logische Verknüpfung miteinander gestellt. Die Verschaltung erfolgt durch Betätigung eines entsprechenden Buttons (durch Mausklick oder Touchbedienung) der Installationssoftware und wird grafisch angezeigt. Die Verschaltung ist in Figur 3 gezeigt. Durch dieses Verschalten erhält der Aktor A₁ eine Information, dass er zum Zwecke der Lichtsteuerung im Flurerdgeschoss von dem Sensor S₁, dem Sensor S₂ oder dem Sensor S₃ angesteuert werden kann. Die Wirkortattributierung der Sensoren kann automatisch beim Verschalten der Sensoren mit den Aktoren erfolgen, wobei jeder Sensor, der mit einem Aktor verknüpft wird, das Wirkortattribut dieses Aktors zugewiesen bekommt. Dieses Verschalten erfolgt in an sich bekannter Weise, so dass sich weitere diesbezügliche Ausführungen an dieser Stelle erübrigen. Durch dieses Verschalten ist eine Funktionsgruppe, die auch als Automatisierungsinsel oder Automatisierungsteillösung angesprochen werden kann, gebildet, deren Funktionsbausteine alle am gleichen Ort ihre Wirkung erzielen. Bevorzugt ist, dass die zu einer Funktionsgruppe gehörigen Funktionsbausteine jeweils dasselbe Wirkortattribut aufweisen.

In der Praxis kann das Verschalten von Sensoren und Aktoren auch offline und somit ohne Anschluss an den Bus des Gebäudeinstallationssystems erfolgen. Auf diese Weise können die gewünschten Verschaltungen an einem beliebigen Ort mit einer Inbetriebnahmesoftware hergestellt werden. Anschließend können die Geräte installiert, Netzwerkadressen zugeordnet und mit den offline verschalteten Funktionsbausteinen abgeglichen werden.

Bei dem dargestellten Ausführungsbeispiel handelt es sich bei den Sensoren S₂ und S₃ um Mehrfachtaster, mit denen neben dem Aktor A₁ weitere Aktoren angesteuert werden können. So ist beispielsweise bei dem Sensor S₃ mit Installationsort im Bereich des Garagentores ein zweiter Tastsensor mit einem in den Figuren nicht dargestellten weiteren Aktor zum Schalten der Garagendeckenbeleuchtung verknüpfbar.

Sowohl über die eingesetzte Inbetriebnahmesoftware als auch durch Hinterlegen der Attribute in einem oder mehreren entsprechenden Attributspeicherplätzen in den Funktionsbausteinen können die Funktionsgruppen anhand ihres Wirkortattributes in einfacher Weise aus dem System ausgelesen bzw. herausgefiltert werden. Dieses erleichtert nicht nur das Verschalten von Sensoren und Aktoren, sondern vor allem auch die Übersicht in einem Gebäudeinstallationssystem und Wartungs- bzw. Überprüfungsarbeiten, beispielsweise bei einer Fehlersuche.

Die Attribute sind systemseitig abrufbar, entweder mit oder über eine Inbetriebnahme- und Wartungssoftware oder über das an den Bus des Gebäudeinstallationssystems angeschlossene Steuergerät, welches in diesem Fall die Attribute stellvertretend speichert und verwaltet. Insofern ist unter dem im Rahmen dieser Ausführung verwendeten Begriff des systemseitig Abrufbaren ein Merkmal gemeint, anhand dessen ein Funktionsbaustein als Filterkriterium aus der Gesamtzahl der Funktionsbausteine herausgefiltert werden kann.

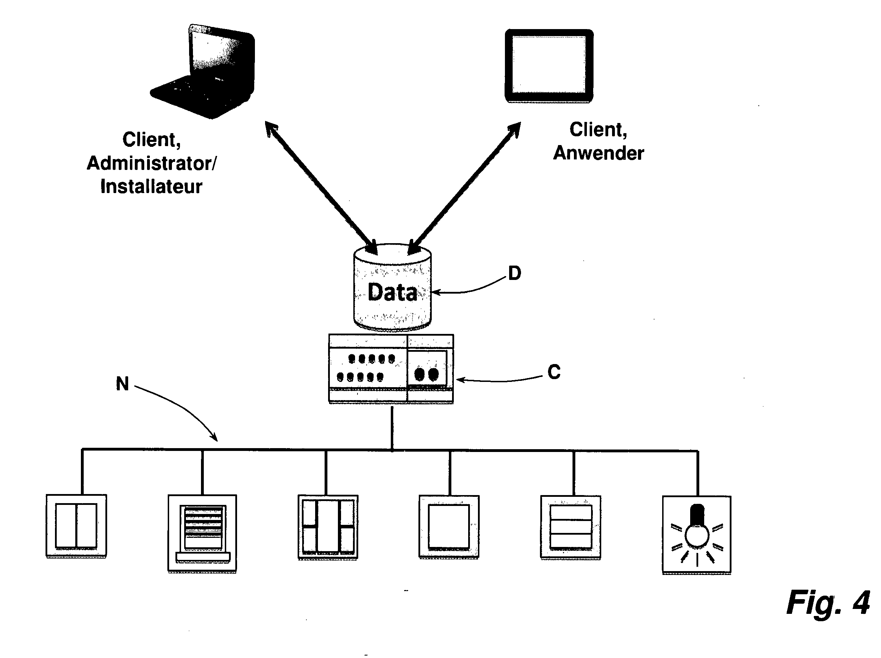

Figur 4 zeigt schematisiert ein Gebäudeinstallationssystem mit mehreren Sensoren und Aktoren als Funktionsbausteine. Diese sind über ein Netzwerk N miteinander verbunden. Teil des Netzwerkes N ist ebenfalls ein Systemkontroller C. Dem Systemkontroller C ist ein Datenspeicher D zugeordnet, in dem die für die Zwecke des vorbeschriebenen Verfahrens relevanten Daten abgelegt sind.

Die Projektierung und Inbetriebnahme, bei der mittels eines geeigneten Inbetriebnahmetools eine Gebäudestruktur erstellt, die Funktionsbausteine einander zugeordnet und miteinander verschaltet werden, erfolgt zum Beispiel mittels eines PC als Client, der für diese Zwecke an den Systemkontroller C angeschlossen ist. Die systemseitig abgelegten Daten des Gebäudeinstallationssystems können auch anwenderseitig nutzbar gemacht und genutzt werden. In geeigneter Weise wird zu diesem Zweck seitens eines Anwenders ein Eingabeterminal, etwa ein PC, ein PDA oder ein Smartphone an das Netzwerk angeschlossen. Zur Vereinfachung der Anzeige auf einem solchen Eingabepanel sind in den Datenspeicher D entsprechende Bedientemplates abgelegt, durch die in Abhängigkeit von dem jeweils verwendeten Gerät die gewünschten Daten in der benötigten Formatierung entsprechend formatiert bereitgestellt werden. Zudem besteht die Möglichkeit, mittels einer solchen Eingabestation Aktoren anzusteuern, womit einer solcher Eingabestation zusätzlich die Funktionalität einer Fernbedienung zukommt. Wesentlich ist für eine übersichtliche Visualisierung die Wirkortattributierung der Sensoren, da erst dieses Kriterium eine gezielte Auswahl der bei einem Visualisierungs- bzw. Fernbedienungsmodus anzuzeigenden Sensoren bzw. Aktoren ermöglicht.

Beispielhaft sind in Figur 4 als Clients ein Client als Administrator bzw. Installateur und ein weiterer Client als Anwender dargestellt. Typischerweise greifen diese nicht gleichzeitig auf das System zu.

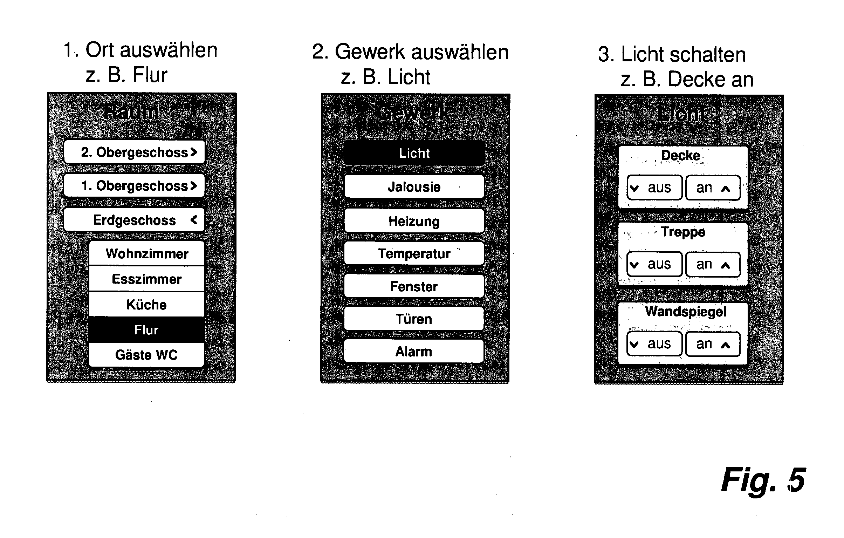

Figur 5 zeigt beispielhaft die Anzeige auf dem Anwenderclient, beispielsweise als PDA ausgestaltet, wenn durch diesen das Deckenlicht im Flurerdgeschoss geschaltet werden soll. Um anhand der Attributierung der Sensoren die gewünschte Auswahl zu treffen, wird bei dem dargestellten Ausführungsbeispiel in einen ersten Schritt der Wirkort ausgewählt. In einem zweiten Schritt wird das anzusteuernde Gewerk gewählt, welches im dargestellten Ausführungsbeispiel das Gewerk "Licht" ist. In einem dritten Schritt werden nach Auswahl des Gewerkes die möglichen Aktoren angezeigt. Bei dem dargestellten Ausführungsbeispiel handelt es sich um das Licht an der Decke, im Bereich der Treppe und an einem Wandspiegel. Über die in den Touchscreen des Anwenderclient dargestellten Schaltflächen kann das Licht an besagten Stellen geschaltet werden.

Auf diese Weise lässt sich jeder Aktor auswählen und ansteuern. Dabei versteht es sich, dass ebenfalls zuerst das Gewerk und dann der Ort ausgewählt werden kann, um zu demselben Ziel zu gelangen.

Die Erfindung ist anhand eines Ausführungsbeispiels beschrieben worden. Ohne den Umfang der geltenden Ansprüche zu verlassen, ergeben sich für einen Fachmann zahlreiche weitere Ausgestaltungen, die Erfindung verwirklichen zu können, ohne dass dieses im Einzelnen ausgeführt werden müsste. Gleichwohl sind auch diese Ausgestaltungen Teil der Offenbarung dieser Ausführungen.

## Patentansprüche

1. Verfahren zum logischen Verknüpfen von Sensoren (S₁, S₂, S₃,) und Aktoren (A₁) als untereinander über einen Bus verbundene Funktionsbausteine eines Netzwerkes, geeignet um im Rahmen einer Inbetriebnahme eines Gebäudeinstallationssystems angewandt werden zu können, **dadurch gekennzeichnet, dass**
- jedem Aktor (A₁) zumindest zwei Attribute (I_{A}, W_{A}) zugeteilt werden, von denen eines ein Installationsortattribut (I_{A}) als Ortsangabe, an der der Aktor im Gebäude installiert ist, und ein weiteres ein Wirkortattribut (W_{A}) als Ortsangabe ist, an der die Wirkung des Aktors (A₁) im Gebäude stattfindet oder in Erscheinung tritt,
- jedem Sensor (S₁, S₂, S₃) ein Installationsortattribut (I_{S1}, I_{S2}, I_{S3}) als Ortsangabe, an der der Sensor (S₁, S₂, S₃) im Gebäude installiert ist, zugeordnet worden ist oder zugeordnet wird,
- ausgehend von dem Wirkortattribut (W_{A}) eines Aktors (A₁) wenigstens ein Installationsort bestimmt wird, von dem aus der Aktor (A₁) beeinflusst werden soll, und aus der Gruppe der Sensoren (S₁, S₂, S₃) ein oder mehrere Sensoren (S₁, S₂, S₃), durch die der Aktor (A₁) beeinflusst werden soll, anhand dessen ausgewählt werden, dass ihr Installationsortattribut (I_{S1}, I_{S2}, I_{S3}) dem genannten Installationsort entspricht, und
- anschließend eine logische Verknüpfung zwischen den ausgewählten Sensoren (S₁, S₂, S₃) und Aktoren (A₁) hergestellt wird,
- wobei die Verknüpfung grafisch über eine Inbetriebnahmesoftware auf einem Display angezeigt wird, so dass ersichtlich ist, an welcher Stelle in dem Gebäude entsprechende Funktionsbausteine installiert sind.

2. Verfahren nach Anspruch 1, **dadurch gekennzeichnet, dass** dem oder den zum Beeinflussen eines Aktors (A₁) ausgewählten Sen-soren (S₁, S₂, S₃) ein dem Wirkortattribut des Aktors (A₁) entsprechendes Wirkortattribut (W_{S1}, W_{S2}, W_{S3}) als Ortsangabe zugeteilt wird, an der die Wirkung des durch den jeweiligen Sensor (S₁, S₂, S₃) beeinflussbaren Aktors (A₁) stattfindet oder in Erscheinung tritt.

3. Verfahren nach Anspruch 1 oder 2, **dadurch gekennzeichnet, dass** den Sensoren (S₁, S₂, S₃) und/oder Aktoren (A₁) als weiteres Attribut ein Funktionalitätsattribut als Angabe bezüglich ihrer Funktionalität zugeordnet wird.

4. Verfahren nach einem der Ansprüche 1 bis 3, **dadurch gekennzeichnet, dass** zur Systemkonfigurierung, Systemauswertung und/oder Systemüberprüfung eine Filterung der Funktionsbausteine anhand zumindest einer ihrer Attribute erfolgt.

5. Verfahren nach Anspruch 4, **dadurch gekennzeichnet, dass** zur Systemkonfigurierung im Rahmen des Schrittes der Sensorauswahl eine Installationsort- und/oder Funktionalitäts-bezogene Filterung der verfügbaren Sensoren (S₁, S₂, S₃) durchgeführt wird.

6. Verfahren nach einem der Ansprüche 1 bis 5, **dadurch gekennzeichnet, dass** die logische Verschaltung zwischen den ausgewählten Sensoren (S₁, S₂, S₃) und Aktoren (A₁) offline hergestellt wird, bevor diese logische Verschaltung in das Netzwerk eingespeist wird.

7. Verfahren nach Anspruch 6, **dadurch gekennzeichnet, dass** eine logische Verschaltung zwischen Sensoren (S₁, S₂, S₃) und Aktoren (A₁) als Funktionsbausteine grafisch durch Zeichnen von Verbindungslinien in einer Bediensoftware realisiert wird.

8. Verfahren nach einem der Ansprüche 1 bis 7, **dadurch gekennzeichnet, dass** die logische Verschaltung zwischen Aktoren (A₁) und Sensoren (S₁, S₂, S₃) als Source-Destination-Verschaltung durchgeführt wird.

9. Verfahren nach einem der Ansprüche 1 bis 8, **dadurch gekennzeichnet, dass** die Funktionsbausteine mit ihrer Attributierung systemseitig speichert werden und das auf diese Daten über eine Schnittstelle durch einen Client zugegriffen werden kann.

10. Verfahren nach Anspruch 9, **dadurch gekennzeichnet, dass** nach Ablage der Projektierungsdaten im Systemkontroller, insbesondere der Hinterlegung der Wirkort- und Installationsortattribute in Bezug auf die Funktionsbausteine eine Bedienung von Aktoren und Visualisierung von Sensorzuständen mittels vorgefertigter Templates automatisch generiert wird.

11. Verfahren nach einem der Ansprüche 1 bis 10, **dadurch gekennzeichnet, dass** jeder der Funktionsbausteine (A₁, A₂, S₁, S₂, S₃) über zumindest einen Attributspeicherplatz verfügt, in dem ein oder mehrere Attribute als Angaben zu dem Funktionsbaustein (A₁, A₂, S₁, S₂, S₃) gespeichert und systemseitig abgerufen werden, wobei ein Attributspeicherplatz zum Speichern des Installationsortattributs (I_{A}, I_{S1}, I_{S2}, I_{S3}) vorgesehen ist, und dass die Aktoren (A₁, A₂) über einen weiteren Attributspeicherplatz verfügen, zum Speichern des Wirkortattributs (W_{A}) vorgesehen ist.

12. Verfahren nach Anspruch 11, **dadurch gekennzeichnet, dass** die Sensoren (S₁, S₂, S₃) über einen weiteren Attributspeicherplatz verfügen, der zum Speichern des Wirkortattributs (W_{S1}, W_{S2}, W_{S3}) vorgesehen ist.

13. Verfahren nach Anspruch 11 oder 12, **dadurch gekennzeichnet, dass** den Speicherplätzen der unterschiedlichen Attribute unterschiedliche Ausleseadressen zugeordnet sind.

14. Verfahren nach einem der Ansprüche 11 bis 13, **dadurch gekennzeichnet, dass** das Gebäudeinstallationssystem über einen einem Systemcontroller (C) zugeordneten und von diesem verwalteten Datenspeicher (D) verfügt, in dem die Struktur des Gebäudeinstallationssystems mit ihrem Funktionsbausteinen (A₁, A₂, S₁, S₂, S₃) und deren Attributierung hinterlegt sind, und ein oder mehrere Schnittstellen vorgesehen sind, über die zumindest ein Client an das System angeschlossen wird.

## Claims

1. Method for logically connecting sensors (S₁, S₂, S₃) and actuators (A1) as functional modules of a network interconnected by means of a bus, suitable for being able to be used when starting up a building installation system, **characterised in that**
- at least two attributes are allocated to each actuator(A1), one of said attributes being an installation attribute (I_{A}) as the location at which the actuator is installed in the building, and another one being a target location attribute (W_{A})as the location at which the action of the actuator (A₁) takes place or is apparent in the building,
- an installation attribute (I_{S1}, I_{S2}, I_{S3}) has been or is allocated to each sensor (S₁, S₂, S₃), as the location at which the sensor (S₁, S₂, S₃) is installed in the building,
- starting from the target location attribute (WA) of an actuator (A₁) at least one installation location is determined, from which the actuator (A₁) is to be influenced, and from the group of sensors (S₁, S₂, S₃) one or more sensors (S₁, S₂, S₃) by which the actuator (A₁) is to be influenced, by means of which it is selected that its installation location attribute corresponds to the stated installation location, and then a logical link is made between the selected sensors (S₁, S₂, S₃) and actuators (A₁)
- wherein the link is displayed graphically by means of a start-up software on a display so that it is evident where in the building corresponding functional modules are installed.

2. Method according to claim 1, **characterised in that** a target location attribute (W_{S1}, W_{S2}, W_{S3}) corresponding to the target location attribute of the actuator (A₁) is allocated to the sensor or sensors (S₁, S₂, S₃) selected to influence an actuator (A₁), as the location at which the action of the actuator (A₁) which can be influenced by the particular sensor (S₁, S₂, S₃) takes place or becomes apparent.

3. Method according to claim 1 or 2, **characterised in that**, as an additional attribute, a functionality attribute is allocated to the sensors (S₁, S₂, S₃) and / or actuators (A₁) as information regarding their functionality.

4. Method according to any one of claims 1 to 3, **characterised in that**, for system configuration, system analysis and / or system checking, a filtering of the functional modules occurs by means of at least one of their attributes.

5. Method according to claim 4, **characterised in that**, for the system configuration, an installation location-related and / or functionality-related filtering of the available sensors (S₁, S₂, S₃) is carried out in the context of the steps of sensor selection.

6. Method according to any one of claims 1 to 5,**characterised in that** the logical interconnection between the selected sensors (S₁, S₂, S₃) and actuators (A₁) is produced offline, before this logical interconnection is saved to the network.

7. Method according to claim 6, **characterised in that** a logical interconnection between sensors (S₁, S₂, S₃) and actuators (A₁) as functional modules is implemented graphically by the drawing of connecting lines in a user software.

8. Method according to any one of claims 1 to 7,**characterised in that** the logical interconnection between actuators (A₁) and sensors (S₁, S₂, S₃) is carried out as a source-destination interconnection.

9. Method according to any one of claims 1 to 8,**characterised in that** the functional modules are saved by the system with their attributes, and that these data can be accessed by a client by means of an interface.

10. Method according to claim 9, **characterised in that** after storing the project planning data in the system controller, in particular the depositing of the target location and installation location attributes in relation to the functional modules, an operation of actuators and display of sensor statuses is automatically generated by means of ready-made templates.

11. Method according to any one of claims 1 to 10, **characterised in that** each of the functional modules (A₁, A₂, S₁, S₂, S₃) has at least one attribute memory space in which one or more attributes are saved and retrieved by the system as information about the functional module (A₁, A₂, S₁, S₂, S₃), wherein one attribute memory space is provided for storing the installation location attribute (I_{A}, Iₛ₁, Iₛ₂, Iₛ₃), and that the actuators(A₁, A₂) have a further attribute memory space which is provided for saving the target location attribute (W_{A}).

12. Method according to claim 11, **characterised in that** the sensors (S₁, S_{2,} S₃) have a further attribute memory space which is provided for saving the target location attribute (W_{S1}, W_{S2}, W_{S3}).

13. Method according to claim 11 or 12, **characterised in that** different read addresses are allocated to the memory spaces of the different attributes.

14. Method according to any one of claims 11 to 13, **characterised in that** the building installation system has a data memory (D) allocated to a system controller (C) and managed by it, in which the structure of the building installation system is deposited with its functional modules (A₁, A₂, S₁, S₂, S₃) and their attributes, and one or more interfaces are provided by means of which at least one client is connected to the system.

## Revendications

1. Procédé de combinaison logique de capteurs (S₁, S₂, S₃) et d'actionneurs (A₁), en tant que blocs fonctionnels d'un réseau reliés les uns aux autres par un bus, destinés à pouvoir être utilisés dans le cadre de la mise en service d'un système d'installation dans un bâtiment, **caractérisé en ce que**
- au moins deux attributs (I_{A}, W_{A}) sont affectés à chaque actionneur (A₁), dont l'un est un attribut du lieu d'installation (I_{A}), faisant office d'indication du lieu dans lequel l'actionneur est installé dans le bâtiment, et dont l'autre est un attribut du lieu d'action (W_{A}) qui faisant office d'indication du lieu dans lequel l'action de l'actionneur (A₁) se déroule ou se manifeste dans le bâtiment,
- un attribut du lieu d'installation (I_{S1}, I_{S2}, I_{S3}), faisant office d'indication du lieu dans lequel le capteur (S₁, S₂, S₃) est installé dans le bâtiment, est affecté ou a été affecté à chaque capteur (S₁, S₂, S₃),
- partant de l'attribut du lieu d'action (W_{A}) d'un actionneur (A₁), au moins un lieu d'installation est déterminé, à partir duquel l'actionneur (A₁) doit être influencé et, un ou plusieurs capteurs (S₁, S₂, S₃) du groupe des capteurs (S₁, S₂, S₃) qui doivent exercer une influence sur l'actionneur (A₁), sont sélectionnés au moyen de ce dernier de sorte que leur attribut du lieu d'installation (I_{S1}, I_{S2}, I_{S3}) corresponde au lieu d'installation cité et
- qu'ensuite, une combinaison logique entre les capteurs (S₁, S₂, S₃) et les actionneurs (A₁) sélectionnés est réalisée,
- la combinaison étant affichée de façon graphique sur un afficheur au moyen d'un logiciel de mise en service, de façon à visualiser à quel emplacement dans le bâtiment sont installés les blocs fonctionnels correspondants.

2. Procédé selon la revendication 1, **caractérisé en ce qu'**un attribut du lieu d'action (W_{S1}, W_{S2}, W_{S3}) correspondant à l'attribut du lieu d'action d'un actionneur (A₁) est affecté au capteur ou aux capteurs (S₁, S₂, S₃) sélectionnés pour exercer une influence sur un actionneur (A₁), faisant office d'indication du lieu dans lequel l'action de l'actionneur (A₁), subissant l'influence du capteur (S₁, S₂, S₃) en question, se déroule ou se manifeste.

3. Procédé selon la revendication 1 ou 2, **caractérisé en ce qu'**en guise d'attribut supplémentaire, un attribut de fonctionnalité est affecté aux capteurs (S₁, S₂, S₃) et/ou aux actionneurs (A₁) faisant office d'indication concernant leur fonctionnalité.

4. Procédé selon l'une des revendications 1 à 3, **caractérisé en ce que**, pour configurer le système, évaluer le système et/ou contrôler le système, un filtrage des blocs fonctionnels se fait en utilisant au moins l'un de leurs attributs.

5. Procédé selon la revendication 4, **caractérisé en ce que**, pour configurer le système dans le cadre de l'étape de sélection du capteur, un filtrage des capteurs (S₁, S₂, S₃) disponibles est réalisé en fonction du lieu d'installation et/ou de la fonctionnalité.

6. Procédé selon l'une des revendications 1 à 5, **caractérisé en ce que** la connexion logique entre les capteurs (S₁, S₂, S₃) sélectionnés et les actionneurs (A₁) est réalisée offline, avant de charger cette connexion logique dans le réseau.

7. Procédé selon la revendication 6, **caractérisé en ce qu'**une connexion logique entre les capteurs (S₁, S₂, S₃) et les actionneurs (A₁) en tant que blocs fonctionnels est réalisée de façon graphique, en dessinant des lignes de liaison dans un logiciel utilisateur.

8. Procédé selon l'une des revendications 1 à 7, **caractérisé en ce que** la connexion logique entre les actionneurs (A₁) et les capteurs (S₁, S₂, S₃) est réalisée en tant que connexion Source-Destination.

9. Procédé selon l'une des revendications 1 à 8, **caractérisé en ce que** les blocs fonctionnels avec leurs attributions sont stockés dans le système et qu'un client peut accéder à ces données grâce à une interface.

10. Procédé selon la revendication 9, **caractérisé en ce que**, après dépôt des données de projection dans le contrôleur système, notamment après la mise en mémoire des attributs du lieu d'action et du lieu d'installation en fonction des blocs fonctionnels, l'utilisation des actionneurs et de la visualisation des états des capteurs est générée automatiquement au moyen de modèles préparés en amont.

11. Procédé selon l'une des revendications 1 à 10, **caractérisé en ce que** chacun des blocs fonctionnels (A₁, A₂, S₁, S₂, S₃) dispose au moins d'un espace mémoire d'attributs, dans lequel un ou plusieurs attributs fournissant des indications sur le bloc fonctionnel (A₁, A₂, S₁, S₂, S₃) sont mémorisés et peuvent être appelés par le système, un espace mémoire d'attributs étant prévu pour mémoriser l'attribut du lieu d'installation (I_{A}, I_{S1}, I_{S2}, I_{S3}) et **en ce que** les actionneurs (A₁, A₂) disposent d'un espace mémoire d'attributs supplémentaire, prévu pour mémoriser l'attribut du lieu d'action (W_{A}).

12. Procédé selon la revendication 11, **caractérisé en ce que** les capteurs (S₁, S₂, S₃) disposent d'un espace d'attributs supplémentaire, prévu pour mémoriser l'attribut du lieu d'action (W_{S1}, W_{S2}, W_{S3}).

13. Procédé selon l'une des revendications 11 ou 12, **caractérisé en ce que** des adresses de tri différentes sont affectées aux espaces mémoire des différents attributs.

14. Procédé selon l'une des revendications 11 à 13, **caractérisé en ce que** le système d'installation de bâtiment dispose d'une mémoire de données (D) affectée à un contrôleur système (C) et administrée par ce dernier, dans laquelle la structure du système d'installation de bâtiment avec ses blocs fonctionnels (A₁, A₂, S₁, S₂, S₃), et leurs attributions sont mémorisées, et une ou plusieurs interfaces sont prévues par lesquelles au moins un client est raccordé au système.
